(19) Europäisches Patentamt
European Patent Office
Office européen des brevets

(11) **EP 3 742 179 A1**

(12) **EUROPEAN PATENT APPLICATION**

(43) Date of publication:
**25.11.2020 Bulletin 2020/48**

(51) Int Cl.:
*G01Q 60/32* (2010.01)        *G01N 29/06* (2006.01)

(21) Application number: **19175567.7**

(22) Date of filing: **21.05.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nederlandse Organisatie voor toegepast- natuurwetenschappelijk Onderzoek TNO
2595 DA 's-Gravenhage (NL)**

(72) Inventors:
• **PIRAS, Daniele
  2595 DA 's-Gravenhage (NL)**

• **VAN NEER, Paul Louis Maria Joseph
  2595 DA 's-Gravenhage (NL)**
• **QUESSON, Benoit André Jacques
  2595 DA 's-Gravenhage (NL)**
• **FILLINGER, Laurent
  2595 DA 's-Gravenhage (NL)**
• **HATAKEYAMA, Kodai
  2595 DA 's-Gravenhage (NL)**
• **RAJADURAI, Sri Ram Shankar
  2595 DA 's-Gravenhage (NL)**
• **VAN ES, Maarten Hubertus
  2595 DA 's-Gravenhage (NL)**
• **MOHTASHAMI, Abbas
  2595 DA 's-Gravenhage (NL)**

(74) Representative: **V.O.
P.O. Box 87930
2508 DH Den Haag (NL)**

(54) **METHOD AND SYSTEM FOR IMAGING STRUCTURES BELOW THE SURFACE OF A SAMPLE**

(57)    The present document relates to a heterodyne scanning probe microscopy (SPM) method for subsurface imaging, and includes: applying, using a transducer, an acoustic input signal to the sample, wherein the acoustic input signal has a frequency of at least 1 gigahertz; sensing an acoustic output signal using a probe, the probe including a cantilever and a probe tip, wherein the probe tip is in contact with the surface, wherein the acoustic output signal is representative of acoustic waves responsive to the acoustic input signal that are measurable at the surface; wherein the acoustic input signal is applied to the sample comprising a distinct pulse of acoustic energy followed by a relaxation period, wherein an acoustic power of the acoustic input signal during the pulse is at least twice as large as an acoustic power during the relaxation period. The present document further relates to a scanning probe microscopy method.

Fig. 1

**EP 3 742 179 A1**

## Description

Field of the invention

The present invention is directed at a heterodyne scanning probe microscopy method for imaging structures on or below the surface of a sample, the method including: applying, using a transducer, an acoustic input signal to the sample, wherein the acoustic input signal has a frequency of at least 1 gigahertz; and sensing an acoustic output signal using a probe, the probe including a cantilever and a probe tip, wherein the probe tip is in contact with the surface, wherein the acoustic output signal is representative of acoustic waves responsive to the acoustic input signal that are measurable at the surface. The invention is further directed at a scanning probe microscopy system for imaging structures below the surface of a sample.

Background

Acoustic scanning probe microscopy methods, such as ultrasonic atomic force microscopy (UAFM), form a class of imaging and research methods that allows the accurate imaging of sub-surface features in a sample. To perform these methods, an acoustic signal is applied to the sample, either via the surface, via a backside of the sample (i.e. the side opposite the sample surface contacted to the probe), from aside or via any other portion of the sample. Other than standard scanning probe microscopy (SPM) methods, the acoustic SPM methods apply an acoustic signal to the sample which either, through internal scattering of the signal, results in the manifestation of acoustic waves at the sample surface that enable detection of the subsurface topography; or by locally exerting pressure by the probe tip on the sample surface allowing determination and mapping of the local elastic properties which causes internal structures within the sample to become detectable. Whether the acoustic SPM method operates based on detection by scattering of the acoustic signal or by indentation of the surface to detect local elastic properties depends on the frequency of the applied acoustic signal. The present document relates to acoustic SPM methods wherein an acoustic signal of at least 1 gigahertz is applied, which thereby operates based on detection by scattering of the acoustic signal.

Although the technology allows to characterize subsurface features down to nanometer scale, the technology is sensitive to disturbances. Existing methods and systems still suffer from relatively poor signal-to-noise ratio (SNR). To use the full potential of this technology, there is a need to increase the signal-to-noise ratio. One particular problem that diminishes the quality of the resulting measurements is the occurrence of spurious signals caused by internal reflections and reverberations that result in the generation of disturbances within the sample and the system components conveying the acoustic signal. This causes the quality of the measurements to be dependent on the properties of the sample, such as the material of which the sample is made and its internal structure and dimensions.

Summary of the invention

It is an object of the present invention to provide a heterodyne scanning probe microscopy (SPM) method that operates based on detection by scattering of the acoustic signal, and that provides a good signal-to-noise ratio (SNR) and minimizes the occurrence of disturbances in the output signal.

To this end, there is provided herewith a heterodyne scanning probe microscopy for imaging structures below the surface of a sample using a scanning probe microscopy system, the method including: applying, using a transducer, an acoustic input signal to the sample, wherein the acoustic input signal has a frequency of at least 1 gigahertz; sensing an acoustic output signal using a probe, the probe including a cantilever and a probe tip, wherein the probe tip is in contact with the surface, wherein the acoustic output signal is representative of acoustic waves responsive to the acoustic input signal that are measurable at the surface; wherein the acoustic input signal is applied to the sample comprising a distinct pulse of acoustic energy followed by a relaxation period, wherein an acoustic power of the acoustic input signal during the pulse is at least twice as large as an acoustic power during the relaxation period.

The present invention is based on the insight that internal reflections and reverberations in the sample and in elements of the system that convey the acoustic signal, result in the occurrence of standing waves at resonance frequencies that are determined by the material properties and the dimensions of internal structures (e.g. the thickness of layers in the sample). In fact, in conventional methods, the response of a sample to the application of an acoustic signal depends on how good or bad the applied frequency matches a resonance frequency of the whole stack, and whether the resonance frequencies of individual layers or internal structures gives rise to a source of disturbance upon application of the acoustic signal. As a result, the SNR in such conventional methods is significantly dependent on the properties of the sample, which means that if a good measurement is performed on a specific sample, this does not mean that similar good results will be obtained if measurements at a same frequency are performed on a different sample with different properties.

In accordance with the present invention, the method is performed by applying the acoustic input signal to the sample such that it comprises a distinct pulse of acoustic energy followed by a relaxation period. By doing so, a pulse response is obtained from the sample which is responsive to the applied acoustic pulse. In absence of a continuous supply of acoustic energy, the application of an acoustic pulse that is followed by a 'silent' period or relaxation period suppresses or even prevents the generation of standing waves in layers of the sample or system elements that convey the acoustic signal, and likewise suppresses a resonant response of such internal structural features. This improves the overall SNR and quality of the response output signal, and - at least likewise important - makes the results of the measuring method significantly less dependent on the properties of the sample. The reduction of resonant behavior makes the measurement method easier to perform and more robust, because it relaxes the demands on the stability of the system/the tracking of the resonances. Moreover, the improved SNR and quality of the measurement allows for detectability of weaker signals which would in conventional methods be lost in the noise level that is present in the signal. Amongst others, this therefore enables to perform detection of structural features at greater depths in the sample, i.e. to allow performing imaging of deeper layers.

During the relaxation period, although the complete absence of an acoustic signal is preferred, this is certainly not essential. The acoustic input signal applied to the sample must be such that during the relaxation period the amount of acoustic power is insufficient to contribute to the forming of standing waves that are strong enough to deteriorate the SNR. For this, the acoustic power is to be minimized during the relaxation period, and should at least be less than half (or preferably one third (1/3) of) the acoustic power of the pulse at its maximum. Hence, in accordance with the invention, the acoustic power of the acoustic input signal during the pulse is at least twice as large as an acoustic power during the relaxation period.

Preferably, at most a limited amount of acoustic power is present in the applied acoustic signal during the relaxation period. In some embodiments, the acoustic power during relaxation periods may be quenched. For example, a proper design of the transducer element may be suitable to suppress or quench the weaker acoustic pulses with only limited acoustic power. For example, a transducer may consist of a piezo element and a delay line, the latter providing a bearer layer (hereinafter referred to as 'bearer layer' or 'bearer element'). A transducer consisting of a piezo element and a signal bearer layer or bearer element for conveying the acoustic signal to the sample, may be designed such that weak acoustic signals are attenuated by the bearer layer and do not enter the sample.

In some preferred embodiments, the acoustic input signal comprises a plurality of signal components that each have a unique frequency, wherein the plurality of signal components comprise: a base signal component at a carrier frequency; and a plurality of additional signal components, wherein each additional signal component comprises a unique further excitation frequency that is different from the carrier frequency, and wherein at least two of the additional signal components are in a frequency domain located on either side of the carrier frequency; wherein the carrier frequency and the further excitation frequencies together form a group of frequencies, wherein the frequencies of the group of frequencies are distributed with an equal difference frequency between each two subsequent frequencies of the group, such as to thereby provide a periodic acoustic input signal comprising acoustic pulses at a pulse repetition frequency equal to the difference frequency.

The above preferred embodiments of the invention apply a base signal component at a carrier frequency with two or more additional signal components at further excitation frequencies on either side of the carrier frequency (in the frequency domain). The carrier and excitation frequencies applied all have equal mutual frequency differences such that the difference frequency (sometimes referred to as 'modulation frequency') falls within the sensitivity scale of the scanning probe microscope (SPM). The sensitivity scale is determined by the sensitivity of the cantilever itself and that of the sensing elements of the SPM system that are used for monitoring the cantilever response. The sensitivity of the cantilever is determined by the contact resonance frequency of the cantilever, which in turn is related to the cantilever metrics and design, and to the interaction parameters of the interaction between the sample surface and the probe tip.

These mixed signal components in their composition in the acoustic input signal, provide a beat signal in the acoustic input signal with a high power signal bursts that are repetitive at least at a pulse repetition frequency equal to this difference frequency. In fact, each two signal components of the mixed signal having a mutual frequency difference at this difference frequency of the group will provide a contribution to the high power signal bursts in the composite acoustic input signal, which adds to the total signal power of these bursts. Thus at the difference frequency, within the sensitivity frequency range of the system, all these components aggregate to add up to provide high power signal bursts, thereby providing an excellent SNR. In addition, in between the high power bursts, a sequence of low power acoustic pulses will typically be present during the relaxation period. The characteristics of these pulses and the high power bursts can be 'shaped' and tuned by controlling the characteristics of the signal components: the base signal component and the additional signal components. For example, the ratio of powers between the high power bursts on one hand and the low power acoustic pulses on the other hand can be controlled by modifying characteristics such as: the number of additional signal components, the amplitudes (as well as their mutual ratio) of the signal components including the carrier signal, the phase of each component. The amplitudes of the additional signal components, for example, may be smaller, equal or higher than the amplitude of the carrier signal.

The pulse repetition frequency of the high power bursts obtained in the above embodiments equals the difference frequency (i.e. modulation frequency). Therefore, in accordance with some embodiments, controlling the difference frequency may be applied in order to control the duration of each cycle and thereby the total time between each two high power bursts. This in turn directly enables to control the relaxation time. In accordance with some embodiments, therefore, the method further comprises tuning the relaxation period provided by the pulse repetition frequency by setting the difference frequency in dependency of a thickness $d$ of at least one of a sample or a layer of the sample. The relaxation time in these embodiments is set such as to enable the acoustic pulse applied to the sample to attenuate and die out before a next high power pulse is fired. The thickness $d_s$ and/or the velocity of sound $v_s$ may be used to calculate the travel time of an echoed pulse. Between each two echoes (one back, one forth), a pulse propagates through the thickness $d_s$ of a layer. The relaxation time may, for example, be set such that the signal may echo at least 4 times (two back, two forth) before a next high power pulse is applied, such as to let the previous pulse die out or sufficiently weaken before a next pulse is received by the sample. In that case, the relaxation time should be at least four times the one-way propagation time through the sample, hence $t_{rel} \geq 4 * d_s/v_s$. This enables to calculate an estimated cycle duration, and thereby an estimated upper limit for the pulse repetition frequency (and hence an upper limit for the modulation frequency that is desired). For example, suppose a silicon sample has a thickness of 1 millimeter (mm), whereas the velocity of sound in silicon is 9660 meter per second (m/s), then in order to allow 4 echoes before a next high power burst is released, the relaxation period must have a duration of at least $4 * (1 \cdot 10^{-3}/9660) = 0.1 \cdot 10^{-6}$ seconds (i.e. 0.1 microseconds ($\mu$s)). Suppose for a first order estimate that the duration of the high power pulse may be ignored, then the upper limit of the modulation frequency will be 10 megahertz (MHz).

A common silicon wafer typically is 750 micrometer ($\mu$m) and thus slightly thinner than 1 mm, such that $t_{rel}$ in that case is somewhat smaller for four echoes. Moreover, most SPM systems, dependent on the sensing elements present, require a somewhat smaller modulation frequency in order for the output signal to be measurable by the system. Thus, the difference frequency or modulation frequency may be set below 7 MHz, or preferably below 5 MHz, more preferable below 3 MHz, and more preferable below 2 MHz to provide repetition cycles having a duration long enough to enable setting a relaxation period duration that is sufficiently long to last a number of echoes before a next pulse is applied. This enables the pulse, it's echoes and reverberations to die out and prevent the forming of standing waves.

In addition to the above, the number of additional signal components may be increased up to six (three on each side of the carrier frequency), eight (four on each side of the carrier frequency), ten (five on each side of the carrier frequency) or twelve (six on each side of the carrier frequency) additional signal components in addition to the carrier signal. Increasing the number of additional signals causes the high power pulse to narrow in duration, and adds additional low power pulses in between the high power pulses wherein the power of these low power pulses becomes smaller when the number of additional signal components increases. For a number of $n$ additional signal components on each side of the carrier frequency, a total of $(n-1)$ low power pulses will appear in the composite input signal. Simultaneously, the duration of each pulse (including the high power pulse) decreases with $n$, thus the duration $t_{rel}$ of the relaxation period increases. In principle, apart from any practical limits or limits determined by the system used, there is no limit to the number $n$ of additional signal components that may be applied. This may be used to tune the input signal such as to enable the pulses to attenuate and die out between each two subsequent high power pulses.

In accordance with some embodiments, the step of sensing is performed such that the acoustic output signal is only obtained for at least a part of the duration of the distinct pulse of acoustic energy, wherein the obtaining of the acoustic output signal is ceased during the relaxation period. In these embodiments, by only temporarily registering or sensing the output signal during the distinct pulse, and ceasing the sensing or registering thereof during relaxation, the output signal obtained contains the direct response to the first pulse. During this time, the amount of usable signal in relation to the contributions by the disturbance signals from any present standing waves is optimal in favor of obtaining a good SNR.

To achieve this, several possible implementations may be considered. For example, the ceasing the obtaining of the acoustic output signal is performed by at least one of: ceasing registration of a probe tip motion during the relaxation period, such as switching off an analysis system or a receiver during the relaxation period; or operating a probe deflection sensor such as to cease monitoring probe tip motion during the relaxation period, such as by switching off a probe deflection sensor by switching of at least one of a laser unit or an optical sensor; or detaching the probe tip from the sample surface during the relaxation period.

In addition to the above, also the transducer may be designed to contribute to the suppression of weak pulses and to limit the number of echoes before the high power pulses die out. This may be achieved by properly designing the bearer layer, e.g. by proper selection of the bearer material and/or by proper design of the thickness of the bearer layer. For example, a sufficient amount of power may be sent into the sample when the acoustic signal for the first time encounters the interface between the bearer layer and the sample. If the number of allowed echoes is for example set to four, the acoustic input signal pulse upon encountering the interface for the first time will have sufficient power to be used as input signal. Still a fraction of the original amount of power will be present upon encountering the interface the second time (after two echoes, once back and once forth). However, the acoustic power may be completely quenched upon encountering the interface a third time (after four echoes). More in general, in accordance with these embodiments, the transducer has a thickness $d_t$ and comprises a bearer layer made for conveying the acoustic input signal, wherein the bearer layer is made of a material having an acoustic attenuation factor $\alpha_0$, and wherein the thickness $d_t$ of the bearer layer is made such that the acoustic input signal attenuates at least -10 dB, preferably -20 dB, by propagating over a distance of at least $3 * d_t$ in the bearer layer. In accordance with some embodiments, the transducer has a thickness $d_t$ and comprises a bearer layer made for conveying the acoustic input signal, wherein the bearer layer is made of a material being selected such as to provide an acoustic attenuation factor $\alpha_0$ such that the acoustic input signal attenuates at least -10 dB, preferably -20 dB, by propagating over a distance of at least $3 * d_t$ in the bearer layer. Thus, either the material or the thickness (or both) may be properly selected and designed to attenuate the signal sufficiently.

In accordance with a second aspect, there is provided a scanning probe microscopy system for imaging structures below the surface of a sample, comprising a probe for scanning the sample surface, wherein the probe comprises a probe tip mounted on a cantilever, and wherein the probe is mounted on a sensing head arranged for bringing the probe tip in contact with the sampling surface, the system further comprising a motion actuator for enabling motion of the probe relative to the sample, a transducer for applying an acoustic input signal to the sample, wherein the acoustic input signal has a frequency of at least 1 gigahertz, and a probe deflection sensor for producing a sensor signal indicative of an acoustic output signal received via the probe tip, wherein the acoustic output signal is representative of acoustic waves responsive to the acoustic input signal; wherein the transducer is arranged for producing the acoustic input signal such as to comprise a distinct pulse of acoustic energy followed by a relaxation period, wherein an acoustic power of the acoustic input signal during the pulse is at least twice as large as an acoustic power during the relaxation period.

Brief description of the drawings

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention. In the drawings:

Figure 1 schematically illustrates an input signal applied to a sample in a method according to an embodiment of the invention;
Figure 2 schematically illustrates a system in accordance with an embodiment of the invention, for performing a method in accordance with the invention;
Figures 3a and 3b illustrate a pulse response in a method in accordance with the invention;
Figure 4 schematically illustrates attenuation by a designed bearer layer in accordance with an embodiment of the invention;
Figures 5a and 5b schematically illustrate a composite input signal and the manner to obtain such a signal in accordance with an embodiment of the invention.

Detailed description

Scanning probe microscopy is a highly accurate method of imaging structures (down to nanometer scale) on the surface of a sample by scanning a probe with a probe tip across the sample surface, while keeping the probe tip in contact with the surface (contact mode) or vibrating the probe tip such as to tap the probe tip in contact with the surface during each cycle of vibration (tapping mode). In a number of fields of application of scanning probe microscopy, there is an interest in visualizing structures that are present below the surface of a substrate. For example, in the field of semiconductor device manufacturing, device layers may be covered underneath other device layers of a semiconductor device. One possible scanning probe microscopy technique, referred to as heterodyne force microscopy, provides a sensing method that allows the visualization of sub-surface structures. In heterodyne force microscopy, an acoustic signal is applied to the sample which propagates through the sample substrate. The acoustic input signal contains components at various frequencies which in the composition of the input signal aggregate into a component at their difference frequency. The frequency of the applied acoustic signals and the dimensions of the structures determine the physical principle that governs the interaction. For example, at acoustic frequencies smaller than 100 MHz, the acoustic input signal forces the sample surface with variable pressure against the probe tip which contributes to periodic indentations of the surface of the substrate by the tip. This enables characterization of subsurface features by measuring viscoelastic properties of the sample: a subsurface feature can be 'felt' by the tip because it locally changes these viscoelastic properties. At frequencies above 1 GHz the acoustic input signal may be applied to detect subsurface structures based on subsurface scattering of the acoustic signal against these subsurface features. The present invention focuses on the detection of subsurface features based on subsurface scattering of an acoustic signal, typically at frequencies exceeding 1 GHz.

The probe tip of the scanning probe microscopy system is scanned across the surface, and vibrations are picked up by the probe tip from the surface to provide an output signal. The output signal is analyzed using an analysis system for providing information about any sub-surface structures present underneath the surface of the sample. These vibrations that form the output signal may be picked up by means of an optical sensor, often consisting of a laser beam that impinges on the cantilever of the probe and reflects onto an optical detector. However, other techniques are available to monitor probe tip motion such as to obtain the output signal. For example, instead of an optical sensing technique, capacitive measurement of probe tip motion could be applied to obtain an output signal. The invention is not limited to one particular manner of obtaining the output signal.

The acoustic input signals that may be applied can be preselected within a wide range of frequencies, ranging from 1 GHz to at least 1 terahertz (THz); e.g. 100 or 200 GHz. The invention applies heterodyne sensing to enable detection at any acoustic frequencies, e.g. applying multiple acoustic signals of 1 GHz or above but with difference frequencies (modulation frequency) between the individual signal components in a detectable range. The detectable range or sensitivity range is largely determined by the SPM system and the probe characteristics. The sensitivity of the probe is typically most optimal around any of the contact resonance frequencies of the probe. For example, the probe is sensitive between 80% and 120% of the first contact resonance frequency, but also within bands around higher contact resonance mode frequencies (e.g. 2nd, 3rd, 4th, 5th, 6th, etc.). In addition to this, the sensitivity of the rest of the system is determined by the sensitivity of the sensor system that monitors the probe tip motion. Setting the difference frequencies (i.e. modulation frequency) to a value which is within the sensitivity of the system enables the detection of phase and amplitude characteristics and variations in the acoustic output signal through down-conversion of the aggregated frequencies of the acoustic input signal components.

The acoustic input signal is typically applied to the sample using a transducer. Characteristic about a manner of propagation of the signal through material layers of a sample or of the transducer, is that each interface encountered causes reflection of at least a fraction of the signal. If the acoustic signal is continued to be applied, this results in the forming of standing waves between the encountered interfaces. Due to reflection and reverberation of the acoustic signal against these interfaces, the resonance mechanism is continuously provided with acoustic energy and is thereby maintained. In many cases, a sample comprises various interfaces and structural features, and standing waves may be generated by resonance between each two interfaces or each feature present and the characteristics of the resonance signal are dependent on the dimensions involved and the material properties of the resonating material. As a result, the generated standing waves become a source of disturbance appearing in the output signal as noise and diminishing the SNR.

The present invention proposes a different method of excitation of the sample that overcomes the above problems encountered. In the present invention, the sample material is excited by an acoustic input signal consisting of a distinct pulse of acoustic power followed by a relaxation period. The relaxation period serves to let the response of the sample to the applied acoustic pulse die out before applying a new pulse of acoustic power. Moreover, in certain embodiments of the invention, additional measures are taken to attenuate echoing of the acoustic pulse, such as to prevent feeding of any standing waves by such echoes and to obtain a clean response signal.

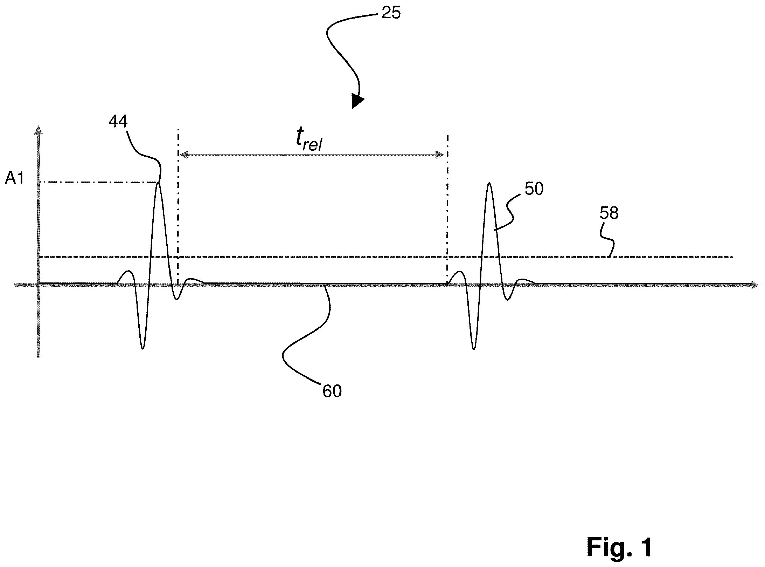

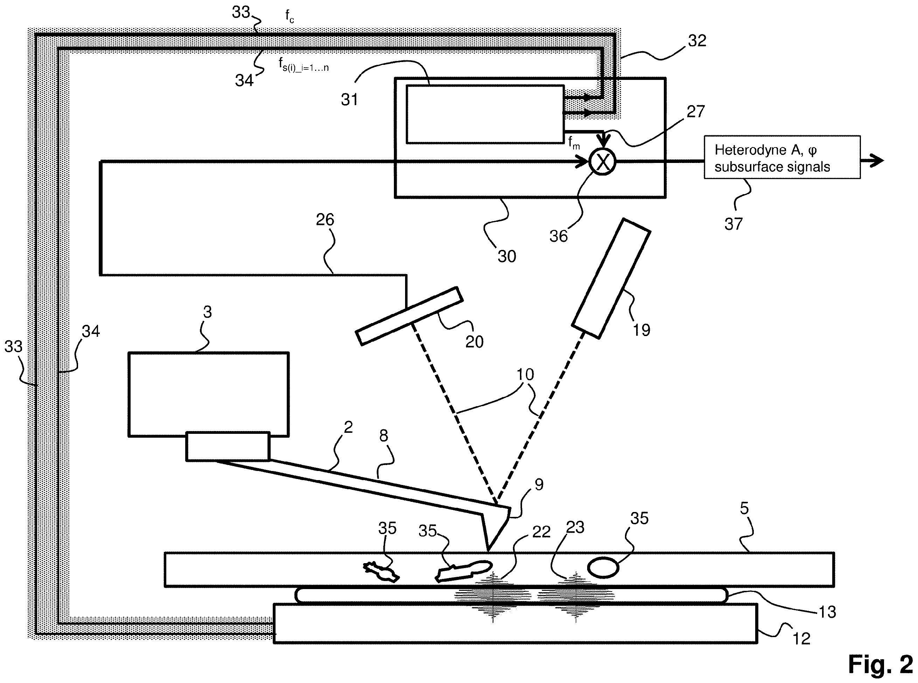

Figure 1 schematically illustrates an acoustic signal as applied a method in accordance with an embodiment of the invention. The acoustic input signal 25 is applied to the sample 5 (see figure 2) such as to excite the sample and to obtain an output signal 26 in response thereto. The method applies a pulsed acoustic signal 25 consisting of a sequence of distinct pulses, such as pulses 44 and 50 as illustrated in figure 1. The pulses are separated in time by a relaxation period 60 of duration $t_{rel}$. Although in figure 1, the acoustic signal 25 is silent during the relaxation period 60, this is not essential to the method and is thus not required per sé. In some embodiments, a limited amount of acoustic power may be present during the relaxation period 60 which is insufficient to significantly contribute to a destructive disturbance mechanism. For example, in figure 1, any pulses of which the acoustic power would not exceed the power level 58 would be acceptable to receive during the relaxation period 60. The acoustic signal pulses 44 and 50 are applied via a transducer, for example transducer 12 in figure 2. The transducer may consist of a piezo type actuator and a bearer layer. The bearer layer may be designed not only to convey the signal to the sample 5, but additionally to attenuate the acoustic signals generated by the piezo actuator. For example, the pulses 44 and 50 would be strong enough to propagate through the bearer layer and be sent into the sample with sufficient power to excite the sample 5. However, any weak acoustic signals, e.g. signals not exceeding the acoustic power level 58, could be attenuated sufficiently such that they either do not reach the sample 5 or do not provide a significant contribution to a potential resonance mechanism in the sample 5.

Figure 2 schematically illustrates a scanning probe microscopy system 1 in accordance with an embodiment, configured for use in a method in accordance with an embodiment of the invention. In the system 1, a probe 2 is attached to a scan head 3. The scan head 3 enables scanning of the probe 2 relative to the surface of a sample 5. The probe 2 consists of a cantilever 8 and a probe tip 9. During scanning, the probe tip 9 is brought in contact with the surface of the sample 5. For example the probe tip 9 may be scanned across the surface of the sample 5 in contact mode (continuous contact between the probe tip 9 and the surface of the sample 5). A probe deflection sensor comprises a laser unit 19 cooperating with a specular reflective surface on the back side of the probe 2 (e.g. back side of cantilever 8 or probe tip 9), and an optical detector 20. The laser unit 19 provides a laser beam 10 that impinges on the cantilever 8 and reflects towards an optical detector 20. Using the optical detector 20, vibrations in the cantilever 8 can be sensed due to small deflections of the reflected beam 10 under influence of such vibrations. This provides an output signal 26 for further analysis.

In accordance with some embodiments of the present invention, a generator 31 generates an input signal 32 for applying an acoustic sensing signal to the sample. The input signal 32 at least consist of a first part 33 and a second part 34. The first part 33 provides the carrier wave or base signal component which is periodic with a frequency $f_c$. The second part 34 provides two or more additional signal components on either side of the carrier frequency (in the frequency domain). The additional signal components in second part 34 are periodic with frequencies $f_s(i)$, wherein i is an index integer ranging from 1 to n (with $n \in \mathbb{N}$ and n>4). The frequencies $f_c$ and $f_{s(i)}$ are at least larger than 1 GHz such as to be in the gigahertz (GHz) range for scattering based subsurface sensing. For example, these signals may be 10 GHz or 20 GHz. Characteristic for the frequencies $f_c$ and $f_{s(i)}$ of the input signal parts 33 and 34 is that the difference between each two subsequent frequencies $f_{s(i)}$ or $f_c$, which is the difference frequency or modulation frequency $f_m$, is within the sensitivity range of the system, e.g. near the first contact resonance frequency $f_0$ (or a higher mode contact resonance frequency) of the cantilever 8.

In some embodiments, the input signal 32 may consist of one base signal component 33 at the carrier frequency $f_c$ and a plurality of additional signal components 34 at unique frequencies $f_{s(i)}$. In the example illustrated in figure 2, these are separated into a first part 33 and second part 34. For example, four additional signal components $f_{s(1)}$, $f_{s(2)}$, $f_{s(3)}$ and $f_{s(4)}$ may be added to the carrier frequency $f_c$, wherein two of the additional signal components are on each side of the carrier frequency $f_c$ in the frequency domain. However, in some embodiments, the input signal 32 may include multiple base signal components at different carrier frequencies and multiple additional signal components associated with each carrier frequency. Each carrier frequency with its associated additional input components forms a group of frequencies within the input signal 32.

The invention is not confined to the above embodiments, and the skilled person may appreciate that there are additional ways of generating and applying a distinct pulse of acoustic power followed by a relaxation period. Furthermore, there are alternative ways to apply such signals to the sample in a repetitive manner.

Both the first input signal part 33 and the second input signal part 34 are converted into an acoustic signal to be applied during scanning. Here, the both input signal parts 33 and 34 are amplified in a power amplifier (not shown) and provided to transducer 12 underneath the sample 5. A coupling medium 13 (e.g. water or a grease or oil) provides for acoustic coupling between the transducer 12 and the sample 5. The signal parts 33 and 34 are respectively converted into acoustic signals 22 and 23 to be applied via the coupling medium 13 to the sample 5. This creates acoustic waves on the surface of the sample 5 that can be picked up by the probe tip 9 when it is in contact with the surface of the sample 5. Figure 2 schematically illustrates sub-surface structures 35 (which may of course be of any arbitrary shape, structure, material, or size). The created surface waves at the surface of sample 5 provide an output signal 26 that allows detection and visualization of these structures 35, which output signal 26 may be obtained via the optical detector 20. The both acoustic signals 22 and 23 will result in a mixed signal, which will be the composite acoustic input signal applied to the sample e.g. underneath the probe 2. The mixed signal comprises all frequency components $f_c$ and $f_{s(i)}$, the sum frequencies $f_{high\_1} = f_c + f_{s(1)}$, $f_{high\_2} = f_c + f_{s(2)}$, $f_{high\_3} = f_c + f_{s(3)}$, ....... $f_{high\_n} = f_c + f_{s(n)}$, and each differential frequency $f_{diff} = |f_c - f_{s(1)}| = |f_{s(2)} - f_{s(1)}| ... = |f_{s(n)} - f_{s(n-1)}|$. Hence, the mixed signal in the input signal also includes a signal at the modulation frequency $f_m$, which will be used to perform the subsurface measurement in accordance with the invention. The differential frequency or modulation frequency $f_m$ is within the sensitivity range of the system, as described above. Therefore, this will provide a frequency component at frequency $f_m$ having a frequency that can be sensed via the cantilever 8. If multiple different modulation frequencies $f_{m1}$ to $f_{m3}$ are present in the output signal, they may be equal to each other or may all be within the sensitivity range as indicated.

Importantly, as in accordance with the present invention the high power acoustic pulse is to be followed by a relaxation period, the modulation frequency $f_m$ must also enable a relaxation period duration that is long enough to let any echoes die out. Hence, preferably the modulation frequency $f_m$ does not exceed 10 MHz, and more preferable be less than 7 MHz, more preferably less than 5 MHz, further more preferably less than 3 MHz, and even more preferably less than 2 MHz. Other acoustic signal characteristics may then be tuned such as to narrow the high power acoustic pulse to provide a relaxation period duration of at least 0.1 μs, preferably at least 0.2 μs.

As will be appreciated, any information on subsurface structures will at least be present in the acoustic output signal 26. This information is also present in the signal component at the modulation frequency $f_m$, which therefore becomes measurable. Therefore, the output signal 26 contains the information on sub-surface structures. This output signal 26 is provided to the analysis system 30. In the analysis system 30, the output signal 26 is compared with a reference signal 27 that at least include the (or all) modulation frequency $f_m$. The refer-

ence signal 27 is created by analyzing the first and second input signal parts 33 and 34 e.g. by digital analysis for determining their difference frequency, and generating the reference signal having a frequency component $f_m$. The comparison between reference 27 and output signal 26 is represented by filter element 36 in figure 1, and at the output of the analysis system 30, there is provided a filtered output signal 37 comprising the amplitude $A(x, y)$ and the phase $\varphi(x, y)$ of the output signal 26 from the optical detector 20. By mapping these location dependent amplitude and phase signals, sub-surface structures may be visualized in accordance with the present invention.

In some embodiments, the acoustic output signal 26 is only obtained for the duration of the first distinct pulse of acoustic power. During the relaxation period, obtaining of the acoustic output signal 26 is ceased. By only temporarily registering or sensing the output signal during the first distinct pulse 44 or 50 of each repetitive cycle, while ceasing the sensing or registering thereof during relaxation 60, the output signal 26 obtained contains the direct response to the first pulse of the input signal 32. During this time, the amount of usable signal in relation to the contributions by the disturbance signals from any present standing waves is optimal in favor of obtaining a good SNR and good quality measurements. Several possible implementations may be considered to achieve this. For example, the ceasing the obtaining of the acoustic output signal 26 is performed by ceasing registration of a motion of the probe tip 9 during the relaxation period 60. This may be achieved by switching off the analysis system 30 or a receiver during the relaxation period 60. Alternatively or additionally, this may also be achieved by operating the probe deflection sensor in a certain manner. For example, to cease monitoring probe tip motion during the relaxation period 60, the probe deflection sensor may be switched off temporarily, e.g. by switching of the laser unit 19 or the optical sensor 20. As a further alternative or additional measure, the probe tip 9 may temporarily be detached from the surface of the sample 5 during the relaxation period 60.

The acoustic signals may be applied using various different methods. In the embodiment of figure 2, the acoustic signal 23 is applied via the transducer 12 and coupling medium 13 to the sample 5. As may be appreciated, the various input signals may also be applied using various different transducers located on different parts of the sample 5, or a transducer on the probe 2, e.g. on the cantilever 8 or probe tip 9. The transducer 12 may consist of a piezo type actuator and a delay line or bearer layer. The bearer layer may be designed not only to convey the signal to the sample 5, but additionally to attenuate the acoustic signals generated by the piezo actuator. This may be achieved, for example, by proper selection of the material, thickness or geometry of the bearer layer in particular in terms of its ability to attenuate acoustic signals. Using such a design, the acoustic properties of the bearer layer could be such that the pulses 44 and 50 would be strong enough to propagate through the bearer layer and be sent into the sample with sufficient power to excite the sample 5. However, any weak acoustic signals, e.g. signals not exceeding the acoustic power level 58 in figure 1, could be attenuated sufficiently such that they either do not reach the sample 5 or do not provide a significant contribution to a potential resonance mechanism in the sample 5.

In addition to the above, it is observed that it is not essential to apply an optical sensing technique to determining probe deflection. In fact any suitable type of probe deflection sensor may be applied. Alternative sensing techniques for example include the application of a piezo-resistive layer, the electrical resistance of which vary with probe deflection. Probe deflection may in that case be detected by detecting voltage differences in an electric signal applied to the piezo-resistive layer. As another alternative, probe deflection may be detected using a piezoelectric element or layer, the potential of which changes dependent on cantilever motion. Alternatively, capacitive measurements may be applied in an electrostatic sensing technique. As some further alternatives, one may also apply an interferometer to measure probe deflection or perform a heat flux measurement in a thermal method by using a temperature difference between probe and sample. The skilled person will be familiar with such techniques and is able to apply them in embodiments of the present invention.

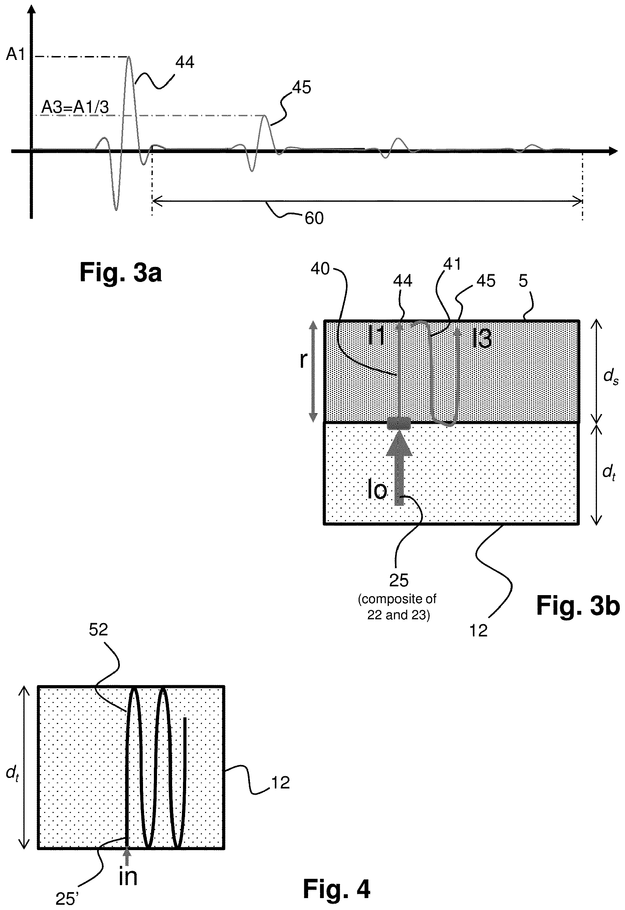

Figures 3a and 3b schematically illustrate a pulse response of a sample 5 in response to an applied acoustic signal 25. The acoustic input signal 25, as illustrated in figure 3b, includes an acoustic pulse 44 with intensity $I_0$. The pulse propagates the sample 5, as indicated by path 40, to reach the sample surface with intensity $I_1$. At the surface, the pulse is echoed, as indicated by arrow 41, and propagates back to the input side of the sample 5. At the interface with the input side, a second echo causes the acoustic pulse to propagate back to the sample surface where it reaches the surface with intensity $I_3$ (the subscript '3' indicates that the intensity value is to be associated with the third echo). The thickness of the sample is $d_s$ and the thickness of the bearer layer of the transducer is $dt$. Figure 3a shows the amplitude $A$ over time of the received surface waves in response to the pulse 44. The amplitude of the first pulse is indicated as $A_1$. The pulse 45 is the response pulse upon the third echo (the signal being echoed once at the surface, a second time at the input side, and now appearing again at the surface). The amplitude is now $A_3 = A_1/3$ and thereafter quickly dies out (showing two additional echo pulses of limited power). It is in most cases not possible to design the bearer layer of transducer 12 such as to obtain a strong first pulse and fully quench all the subsequent echo pulses thereafter. This is in many cases not achievable due to the fact that the first pulse must have enough power to excite the sample 5 and generate a response signal at the surface that can be measured as an output signal 26. However, by sufficient quenching of smaller pulses, it is possible to obtain a signal as illustrated in figure 1 that triggers a response as illustrated in figure 3a. The smaller pulses in figure 3a do not significantly feed the resonance mechanism, such that an excellent SNR is achievable. Figure 4 schematically illustrates attenuation or quenching of weaker signal pulses by a properly designed bearer layer of transducer 12. As follows from the figure, the main signal pulse of signal 25' dies out after four echoes, as illustrated by path 52.

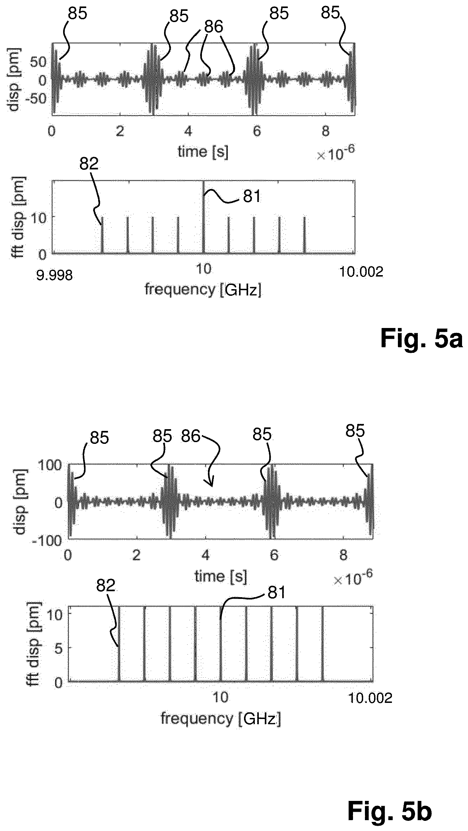

Figures 5a and 5b provide simulations of input signals including one or more base signal components and associated additional signal components. The input signal components are each illustrated in the frequency domain, whereas the simulated output signals are illustrated in the time domain. In Figure 5a, the base signal component comprises carrier wave 81 at a carrier frequency $f_c$ of 10 GHz. On either side of the carrier wave 81, a plurality of additional input signals 82 is added, each being at a different excitation frequency $f_{s(i)}$. The modulation frequency $f_m$ is at 0.333 MHz. The additional input signals 82 are provided as sideband frequencies to the carrier frequency $f_c$, and may sometimes be referred to as sideband signals. The amplitudes $A_{s(i)}$ of the additional signal components are selected to be half the amplitude $A_0$ of the base signal component, thus for all i: $A_{s(i)} = A_0 * 0.5$. The composite input signal in figure 5a, visualized in the time domain, provides a beat signal with one high power burst 85 at a repetition frequency of $f_m = 0.333$ MHz (one burst every $3 * 10^{-6}$ seconds) and three smaller bursts 86 in between the high power bursts 85.

In figure 5b, the amplitudes of all additional signal components 82 are the same as the amplitude for the base signal component 81, thus $A_{s(i)} = A_0$ for all i. The other parameters and characteristics are kept the same as in the example of figure 5a. As can be seen, this changes the shape of the envelope signal in the output signal considerably. In the upper graph of figure 5b, which illustrates the output signal in the time domain, high power signal bursts 85 are still present in the beat signal at a repetition frequency of $f_m = 0.333$ MHz (one burst every $3 * 10^{-6}$ seconds). However, the amplitude of the high power signal bursts 85 is larger. The smaller bursts 86 in between each two bursts 85 are greater in number and smaller in amplitude.

This principle may be applied to tune the acoustic power of pulses 85 in respect of the low power pulses 86. In a different manner, adding additional signal components on each side of the carrier frequency $f_c$ also increases the number of low power pulses 86 and at the same time narrows the pulses 85. This principle may be applied to tune the duration of the relaxation period $t_{rel}$ over the duration of the high power pulses 85.

The present invention has been described in terms of some specific embodiments thereof. It will be appreciated that the embodiments shown in the drawings and described herein are intended for illustrated purposes only and are not by any manner or means intended to be restrictive on the invention. It is believed that the operation and construction of the present invention will be apparent from the foregoing description and drawings appended thereto. It will be clear to the skilled person that the invention is not limited to any embodiment herein described and that modifications are possible which should be considered within the scope of the appended claims. Also kinematic inversions are considered inherently disclosed and to be within the scope of the invention. Moreover, any of the components and elements of the various embodiments disclosed may be combined or may be incorporated in other embodiments where considered necessary, desired or preferred, without departing from the scope of the invention as defined in the claims.

In the claims, any reference signs shall not be construed as limiting the claim. The term 'comprising' and 'including' when used in this description or the appended claims should not be construed in an exclusive or exhaustive sense but rather in an inclusive sense. Thus the expression 'comprising' as used herein does not exclude the presence of other elements or steps in addition to those listed in any claim. Furthermore, the words 'a' and 'an' shall not be construed as limited to 'only one', but instead are used to mean 'at least one', and do not exclude a plurality. Features that are not specifically or explicitly described or claimed may be additionally included in the structure of the invention within its scope. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Additions, deletions, and modifications within the purview of the skilled person may generally be made without departing from the spirit and scope of the invention, as is determined by the claims. The invention may be practiced otherwise then as specifically described herein, and is only limited by the appended claims.

**Claims**

1.  Method for imaging structures below the surface of a sample using a scanning probe microscopy system, the method including:

    applying, using a transducer, an acoustic input signal to the sample, wherein the acoustic input signal has a frequency of at least 1 gigahertz;
    sensing an acoustic output signal using a probe, the probe including a cantilever and a probe tip, wherein the probe tip is in contact with the surface, wherein the acoustic output signal is representative of acoustic waves responsive to the acoustic input signal that are measurable at the surface;
    wherein the acoustic input signal is applied to the sample comprising a distinct pulse of acoustic energy followed by a relaxation period, wherein an acoustic power of the acoustic input signal during the pulse is at least twice as large as an acoustic power during the relaxation period.

2. Method according to claim 1, wherein a duration $t_{rel}$ of the relaxation period is at least 0.1 microseconds, preferably at least 0.2 microseconds, more preferable at least 0.25 microseconds.

3. Method according to claim 1, wherein at least one of:

   the sample comprises a thickness $d_s$ and is made of a material having a speed of sound $\upsilon_s$, and wherein the duration $t_{rel}$ of the relaxation period is at least $t_{rel} = 2 * (d_s/\upsilon_s + d_t/\upsilon_t)$;
   the sample comprises a thickness $d_s$ and is made of a material having a speed of sound $\upsilon_s$, and wherein the transducer has a thickness $d_t$ and comprises a bearer layer having a speed of sound $\upsilon_t$ for conveying the acoustic input signal, and wherein the duration $t_{rel}$ of the relaxation period is at least $t_{rel} = 2 * (d_s/\upsilon_s + d_t/\upsilon_t)$.

4. Method according to claim 1 or 2, wherein the acoustic input signal comprises a plurality of signal components that each have a unique frequency, wherein the plurality of signal components comprise:

   a base signal component at a carrier frequency; and
   a plurality of additional signal components, wherein each additional signal component comprises a unique further excitation frequency that is different from the carrier frequency, and wherein at least two of the additional signal components are in a frequency domain located on either side of the carrier frequency; wherein the carrier frequency and the further excitation frequencies together form a group of frequencies, wherein the frequencies of the group of frequencies are distributed with an equal difference frequency between each two subsequent frequencies of the group, such as to thereby provide a periodic acoustic input signal comprising acoustic pulses at a pulse repetition frequency equal to the difference frequency.

5. Method according to claim 4, further comprising tuning the relaxation period provided by the pulse repetition frequency by setting the difference frequency in dependency of a thickness d of at least one of a sample or a layer of the sample.

6. Method according to any of the claims 4 or 5, wherein the difference frequency is a frequency smaller than 7 megahertz, preferably smaller than 5 megahertz, more preferably smaller than 4 megahertz.

7. Method according to any of the claims 4-6, wherein at least one of:

   the amplitude of the at least four additional signals is smaller than the amplitude of the carrier frequency;
   the amplitude of the at least four additional signals is larger than the amplitude of the carrier frequency;
   the amplitude of the at least four additional signals is equal to the amplitude of the carrier frequency.

8. Method according to any of the preceding claims, wherein the step of sensing is performed such that the acoustic output signal is only obtained for at least a part of the duration of the distinct pulse of acoustic energy, wherein the obtaining of the acoustic output signal is ceased during the relaxation period.

9. Method according to claim 8, wherein ceasing the obtaining of the acoustic output signal is performed by at least one of:

   ceasing registration of a probe tip motion during the relaxation period, such as switching off an analysis system or a receiver during the relaxation period; or
   operating a probe deflection sensor such as to cease monitoring probe tip motion during the relaxation period, such as by switching off a probe deflection sensor by switching of at least one of a laser unit or an optical sensor; or
   detaching the probe tip from the sample surface during the relaxation period.

10. Method according to any one or more of the preceding claims, wherein the transducer has a thickness $d_t$ and comprises a bearer layer made for conveying the acoustic input signal, wherein the bearer layer is made of a material having an acoustic attenuation factor $\alpha_0$, and wherein the thickness $d_t$ of the bearer layer is made such that the acoustic input signal attenuates at least -10 dB, preferably -20 dB, by propagating over a distance of at least $3 * d_t$ in the bearer layer.

11. Method according to any one or more of the preceding claims, wherein the transducer has a thickness $d_t$ and comprises a bearer layer made for conveying the acoustic input signal, wherein the bearer layer is made of a material being selected such as to provide an acoustic attenuation factor $\alpha_0$ such that the acoustic input signal attenuates at least -10 dB, preferably -20 dB, by propagating over a distance of at

least 3 * $d_t$ in the bearer layer.

12. Scanning probe microscopy system for imaging structures below the surface of a sample, comprising a probe for scanning the sample surface, wherein the probe comprises a probe tip mounted on a cantilever, and wherein the probe is mounted on a sensing head arranged for bringing the probe tip in contact with the sampling surface, the system further comprising a motion actuator for enabling motion of the probe relative to the sample, a transducer for applying an acoustic input signal to the sample, wherein the acoustic input signal has a frequency of at least 1 gigahertz, and a probe deflection sensor for producing a sensor signal indicative of an acoustic output signal received via the probe tip, wherein the acoustic output signal is representative of acoustic waves responsive to the acoustic input signal; wherein the transducer is arranged for producing the acoustic input signal such as to comprise a distinct pulse of acoustic energy followed by a relaxation period, wherein an acoustic power of the acoustic input signal during the pulse is at least twice as large as an acoustic power during the relaxation period.

13. Scanning probe microscopy system according to claim 12, wherein the transducer is arranged for producing the acoustic input signal such that a duration $t_{rel}$ of the relaxation period is at least 0.1 microseconds, preferably at least 0.2 microseconds, more preferable at least 0.25 microseconds.

14. Scanning probe microscopy system according to claim 12 or 13, wherein the transducer is arranged for producing the acoustic input signal such that the acoustic input signal comprises a plurality of signal components that each have a unique frequency, wherein the plurality of signal components comprise:

    a base signal component at a carrier frequency; and
    at least four additional signal components, wherein each additional signal component comprises a unique further excitation frequency that is different from the carrier frequency, and wherein the additional signal components are even in number;
    wherein the carrier frequency and the further excitation frequencies together form a group of frequencies, wherein the frequencies of the group of frequencies are distributed with an equal difference frequency between each two subsequent frequencies of the group, such as to thereby provide a periodic acoustic input signal comprising acoustic pulses at a pulse repetition frequency equal to the difference frequency.

15. Scanning probe microscopy system according to any of the claims 12-14, further comprising a tuner for tuning the relaxation period provided by the pulse repetition frequency by setting the difference frequency in dependency of a thickness d of at least one of a sample or a layer of the sample.

16. Scanning probe microscopy system according to any of the claims 12-15, wherein the transducer is arranged for producing the acoustic input signal such that the difference frequency is a frequency smaller than 7 megahertz, preferably smaller than 5 megahertz, more preferably smaller than 3 megahertz, or more preferably smaller than 2 megahertz.

Fig. 1

Fig. 2

Heterodyne A, φ subsurface signals

37 · 27 · 36 · 30 · 31 · 32 · 33 · 34 · $f_c$ · $f_{s(i)\_i=1...n}$ · 26 · 20 · 19 · 10 · 9 · 8 · 2 · 3 · 5 · 35 · 22 · 23 · 13 · 12 · $f_m$

**Fig. 3a**

**Fig. 3b**

**Fig. 4**

Fig. 5a

Fig. 5b

Europäisches Patentamt

European Patent Office

Office européen des brevets

# EUROPEAN SEARCH REPORT

Application Number

EP 19 17 5567

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 349 020 A1 (TNO [NL]) 18 July 2018 (2018-07-18) | 1-3,8-13 | INV. G01Q60/32 G01N29/06 |
| A | * figures 1,3,7 * * paragraph [0008] - paragraph [0011] * * paragraph [0013] - paragraph [0028] * * paragraph [0022] - paragraph [0023] * * paragraph [0030] * | 4-7, 14-16 | |
| X | EP 3 232 192 A1 (NEDERLANDSE ORGANISATIE VOOR TOEGEPAST- NATUURWETENSCHAPPELIJK ONDERZO) 18 October 2017 (2017-10-18) | 1,2,8,9, 12,13 | |
| A | * figures 2,4 * * paragraph [0025] * * paragraph [0028] * * paragraph [0031] * | 3-7,10, 11,14-16 | |

TECHNICAL FIELDS SEARCHED (IPC)

G01Q
G01N

The present search report has been drawn up for all claims

| Place of search | Date of completion of the search | Examiner |
|---|---|---|
| Berlin | 5 November 2019 | Polesello, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 17 5567

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2019

| Patent document cited in search report | | Publication date | Patent family member(s) | | Publication date |
|---|---|---|---|---|---|
| EP  3349020 | A1 | 18-07-2018 | EP | 3349020 A1 | 18-07-2018 |
| | | | EP | 3568701 A1 | 20-11-2019 |
| | | | KR | 20190107050 A | 18-09-2019 |
| | | | TW | 201840982 A | 16-11-2018 |
| | | | WO | 2018132003 A1 | 19-07-2018 |
| EP  3232192 | A1 | 18-10-2017 | EP | 3232192 A1 | 18-10-2017 |
| | | | EP | 3443339 A1 | 20-02-2019 |
| | | | KR | 20180129941 A | 05-12-2018 |
| | | | US | 2019204276 A1 | 04-07-2019 |
| | | | WO | 2017179978 A1 | 19-10-2017 |

EPO FORM P0459

For more details about this annex : see Official Journal of the European Patent Office, No. 12/82